# EUROPÄISCHE PATENTSCHRIFT

(11) **EP 1 193 318 B1**
(45) Veröffentlichungstag und Bekanntmachung des Hinweises auf die Patenterteilung: **03.03.2004**
(21) Anmeldenummer: 01119946.0
(22) Anmeldetag: 17.08.2001
(51) Int. Cl.: C22B 34/36, B22F 9/22, C22B 7/00

(54) **Verfahren zur Wiederverwertung von aus thoriertem Wolfram bestehenden Gegenständen**
Method for recycling of articles consisting of thorium-tungsten
Procédé de recyclage d'articles composés par thorium-tungstène

(30) Priorität: 29.09.2000 DE 10048813
(43) Veröffentlichungstag der Anmeldung: 03.04.2002
(73) Patentinhaber: Patent-Treuhand-Gesellschaft für elektrische Glühlampen mbH, 81543 München (DE)
(72) Erfinder: Meiss, Dieter, Dr., 85189 Augsburg (DE)

(56) Entgegenhaltungen:
- EP-A- 0 204 564
- EP-A- 0 889 006
- DD-A- 300 754
- US-A- 5 125 964
- DATABASE EPODOC [Online] EUROPEAN PATENT OFFICE; CN1053378 A (GANZHOU TUNGSTEN MOLYBDENUM MA(CN)), 31. Juli 1991 (1991-07-31) XP002183999 & CN 1 053 378 A (GANZHOU TUNGSTEN MOLYBDENUM MA) 31. Juli 1991 (1991-07-31)

## Beschreibung

Die Erfindung betrifft ein Verfahren zur Wiederverwertung von aus thoriertem Wolfram bestehenden Gegenständen gemäß dem Patentanspruch 1.

Insbesondere handelt es sich bei der Erfindung um ein Verfahren zum Recycling von aus thoriertem Wolfram bestehenden, defekten Lampenteilen - beispielsweise Elektroden von Hochdruckentladungslampen-, sowie von bei der Lampenproduktion anfallenden, aus thoriertem Wolfram bestehenden Resten - beispielsweise Späne und Drahtstücke -, die ohne eine Wiederverwertung als radioaktiver Sondermüll entsorgt werden müssten. Das Verfahren eignet sich auch zur Aufarbeitung von thorierten Wolframabfällen aus der Schweißelektrodenherstellung. Unter thoriertem Wolfram wird hier Wolfram verstanden, dass Thorium oder eine Thoriumverbindung, üblicherweise Thoriumoxid, als Zusatz oder Dotierstoff enthält.

### I. Stand der Technik

Die europäische Offenlegungsschrift EP 0 889 006 A1 offenbart ein Verfahren zur Rückgewinnung von Wolfram aus Gegenständen, die aus thoriertem Wolfram bestehen. Dieses Rückgewinnungsverfahren ermöglicht mittels eines chemischen Gasphasentransportes die Abtrennung des Dotierstoffes Thorium bzw. Thoriumoxid von dem zur Weiterverwendung vorgesehenen Wolfram. Das von Dotierstoffen befreite Wolfram eignet sich zur Verwendung als Rohstoff in der Lampenfertigung. Ausserden, es ist im DD-A7-300754 bekannt geworden ein Verfahren zur Herstellung von W-Pulver aus W-spänen durch Wasserstoffreduktion.

### II. Darstellung der Erfindung

Es ist die Aufgabe der Erfindung, ein vereinfachtes Verfahren zur Wiederverwertung von aus thoriertem Wolfram bestehenden Gegenständen anzugeben.

Diese Aufgabe wird erfindungsgemäß durch die Merkmale des Patentanspruchs 1 gelöst. Besonders vorteilhafte Ausführungen der Erfindung sind in den Unteransprüchen beschrieben.

Das erfindungsgemäße Wiederverwertungsverfahren für aus thoriertem Wolfram bestehende Gegenstände weist folgende Verfahrensschritte auf:
- Oxidation der aus thoriertem Wolfram bestehenden Gegenstände zu thoriumhaltigen bzw. thoriumoxidhaltigen Wolframoxidpulver,
- Homogenisieren des Wolframoxidpulvers,
- Chemische Reduktion des homogenisierten Wolframoxidpulvers unter einer Wasserstoffgasatmosphäre zu thoriertem Wolframpulver.

Im Unterschied zum Stand der Technik wird bei dem erfindungsgemäßen Wiederverwertungsverfahren auf eine Trennung des Thoriums bzw. des Thoriumoxids von dem Wolfram verzichtet. Das erfindungsgemäße Verfahren ist dadurch erheblich effizienter und kostengünstiger als die bekannten Wiederverwertungsverfahren, die auf eine Trennung des Wolframs von seinen Dotierstoffen abzielen. Das bei dem erfindungsgemäßen Wiederverwertungsverfahren als Endprodukt entstehende, mit Thorium bzw. Thoriumoxid und eventuell weiteren Stoffen verunreinigte Wolframpulver eignet sich sehr gut als Rohstoff für die Herstellung von Elektroden für Schweißvorrichtungen. Das bei dem erfindungsgemäßen Verfahren entstehende thorierte Wolframpulver wird vorteilhafterweise durch Pressen und Sintern zu Stäben verarbeitet. Mittels eines üblichen Drahtziehverfahrens werden aus diesen Stäben vorteilhafterweise Drähte - und zwar vorzugsweise zur Verwendung als Elektroden für Schweißvorrichtungen - geformt. Bei entsprechender Reinheit des mittels des erfindungsgemäßen Verfahrens gewonnenen thorierten Wolframpulvers eignet sich dieses Material auch als Rohstoff für die Fertigung von Lampenelektroden.

### III. Beschreibung des bevorzugten Ausführungsbeispiels

Nachstehend wird die Erfindung anhand eines bevorzugten Ausführungsbeispiels näher erläutert.

Als Rohstoffe für das erfindungsgemäße Wiederverwertungsverfahren dienen aus thoriertem Wolfram bestehende defekte Lampenteile und bei der Fertigung von Lampenelektroden anfallende, aus thoriertem Wolfram bestehende Reste wie zum Beispiel Späne, Drähte, Stäbe und Folien bzw. Bleche. Diese Reste werden je nach ihrer Form sortiert und gegebenenfalls einem Zerkleinerungsprozeß unterworfen. Große Press- und Sinterstäbe werden in einem geeigneten Brecher zu Granulat zerkleinert, während Drähte und Folien bzw. Bleche in einem Schredder zerkleinert werden. Bei Spänen ist kein Zerkleinerungsprozeß erforderlich. Die gegebenenfalls zerkleinerten thorierten Wolframreste werden in einem Ofen mittels einer thermischen Behandlung in einem Temperaturbereich zwischen ungefähr 400°C und 1200°C an Luft oxidiert. Das so entstandene thoriumhaltige bzw. thoriumoxidhaltige Wolframoxidpulver wird homogenisiert und in einem rotierenden Rohrofen unter Wasserstoffgasatmosphäre einer chemischen Reduktion unterzogen. Die chemische Reduktion wird in einem Temperaturbereich von ungefähr 700°C bis 1000°C durchgeführt. Durch die chemische Reduktion entsteht thoriertes Wolframpulver, dessen Thoriumgehalt bzw. Thoriumoxidgehalt durch Zugabe von nicht-thoriertem Wolframpulver auf den gewünschten Anteil verringert oder durch Zugabe von Thoriumoxid erhöht werden kann. Das auf diese Weise gewonnene thorierte Wolframpulver kann auf übliche Weise zu Stäben und Drähten verarbeitet werden. Es dient vorzugsweise als Rohstoff für die Herstellung von Elektroden für Schweißvorrichtungen. Es kann aber auch als Rohstoff in der Lampenfertigung genutzt werden, wenn die dem Wiederverwertungsverfahren zugeführten thorierten Wolframreste einen ausreichend geringen Anteil an Verunreinigungen aufweisen.

## Patentansprüche

1. Verfahren zur Wiederverwertung von aus thoriertem Wolfram bestehenden Gegenständen, wobei das thorierte Wolfram Thorium und/oder Thoriumoxid als Zusatz oder Dotierstoff enthält, das Verfahren folgende Schritte aufweist:
- Oxidation der aus thoriertem Wolfram bestehenden Gegenstände zu thoriumhaltigen bzw. thoriumoxidhaltigen Wolframoxidpulver,
- Homogenisieren des thoriumhaltigen bzw. thoriumoxidhaltigen Wolframoxidpulvers,
- Chemische Reduktion des homogenisierten Wolframoxidpulvers unter einer Wasserstoffgasatmosphäre zu thoriertem Wolframpulver.

2. Verfahren nach Anspruch 1, **dadurch gekennzeichnet, dass** die aus thoriertem Wolfram bestehenden Gegenstände vor der Oxidation zu einem Granulat zerkleinert werden.

3. Verfahren nach Anspruch 1, **dadurch gekennzeichnet, dass** die Oxidation mittels einer thermischen Behandlung an Luft durchgeführt wird.

4. Verfahren nach Anspruch 1, **dadurch gekennzeichnet, dass** die chemische Reduktion des Wolframoxidpulvers in einem rotierenden Rohrofen durchgeführt wird.

5. Verfahren nach Anspruch 1, **dadurch gekennzeichnet, dass** nach der Reduktion der Thoriumgehalt des thorierten Wolframpulvers durch Zugabe von Thoriumoxid oder durch Zugabe von nicht-thoriertem Wolframpulver verändert wird.

6. Verfahren nach Anspruch 1, **dadurch gekennzeichnet, dass** aus dem thorierten Wolframpulver durch Pressen und Sintern Stäbe geformt werden.

7. Verfahren nach Anspruch 6, **dadurch gekennzeichnet, dass** die Stäbe zu Drähten verarbeitet werden.

8. Verfahren nach einem oder mehreren der vorstehenden Ansprüche, **dadurch gekennzeichnet, dass** das aus dem thorierten Wolframpulver Elektroden für eine Schweißvorrichtung hergestellt werden.

9. Verfahren nach einem oder mehreren der vorstehenden Ansprüche, **dadurch gekennzeichnet, dass** das aus dem thorierten Wolframpulver Elektroden, bei entsprechender Reinheit für Lampen hergestellt werden.

## Claims

1. Method for recycling objects consisting of thoriated tungsten, the thoriated tungsten containing thorium and/or thorium oxide as additive or dopant, the method including the following steps:
- oxidation of the objects consisting of thoriated tungsten to form thorium-containing or thorium-oxide-containing tungsten oxide powder,
- homogenization of the thorioum-containing or thorium-oxide-containing tungsten oxide powder,
- chemical reduction of the homogenized tungsten oxide powder under a hydrogen gas atmosphere to form thoriated tungsten powder.

2. Method according to Claim 1, **characterized in that** the objects consisting of thoriated tungsten are comminuted into granules prior to the oxidation.

3. Method according to Claim 1, **characterized in that** the oxidation is carried out by means of a heat treatment in air.

4. Method according to Claim 1, **characterized in that** the chemical reduction of the tungsten oxide powder is carried out in a rotating tubular furnace.

5. Method according to Claim 1, **characterized in that**, after the reduction, the thorium content of the thoriated tungsten powder is changed by adding thorium oxide or by adding non-thoriated tungsten powder.

6. Method according to Claim 1, **characterized in that** rods are formed from the thoriated tungsten powder by pressing and sintering.

7. Method according to Claim 6, **characterized in that** the rods are processed into wires.

8. Method according to one or more of the preceding claims, **characterized in that** electrodes for a welding appliance are produced from the thoriated tungsten powder.

9. Method according to one or more of the preceding claims, **characterized in that** electrodes with corresponding purity for lamps are produced from the thoriated tungsten powder.

## Revendications

1. Procédé de recyclage d'objets en tungstène thorié, le tungstène thorié contenant du thorium et/ou de l'oxyde de thorium comme additif ou comme substance de dopage, le procédé ayant les stades suivants :
- oxydation des objets en tungstène thorié en poudre d'oxyde de tungstène contenant du thorium ou de l'oxyde de thorium,
- homogénéisation de la poudre d'oxyde de tungstène contenant du thorium ou de l'oxyde de thorium,
- réduction chimique de la poudre d'oxyde de tungstène homogénéisée sous atmosphère d'hydrogène gazeux en poudre de tungstène thorié.

2. Procédé suivant la revendication 1, **caractérisé en ce que** l'on fragmente les objets en tungstène thorié avant l'oxydation en un granulé.

3. Procédé suivant la revendication 1, **caractérisé en ce que** l'on effectue l'oxydation au moyen d'un traitement thermique à l'air.

4. Procédé suivant la revendication 1, **caractérisé en ce que** l'on effectue la réduction chimique de la poudre d'oxyde de tungstène dans un four tubulaire rotatif.

5. Procédé suivant la revendication 1, **caractérisé en ce que** l'on modifie après la réduction la teneur en thorium de la poudre de tungstène thorié par addition d'oxyde de thorium ou par addition de poudre de tungstène non thorié.

6. Procédé suivant la revendication 1, **caractérisé en ce que** l'on forme des bâtonnets en la poudre de tungstène thorié par pressage et par frittage.

7. Procédé suivant la revendication 6, **caractérisé en ce que** l'on transforme les bâtonnets en fils.

8. Procédé suivant l'une ou plusieurs des revendications précédentes, **caractérisé en ce que** l'on produit à partir de la poudre de tungstène thorié des électrodes pour un dispositif de soudage.

9. Procédé suivant l'une ou plusieurs des revendications précédentes, **caractérisé en ce que** l'on produit à partir de la poudre de tungstène thorié des électrodes d'une pureté adéquate pour des lampes.
